# EUROPEAN PATENT APPLICATION

(11) **EP 4 635 891 A1**
(43) Date of publication of application: **22.10.2025**
(21) Application number: 23903072.9
(22) Date of filing: 02.10.2023
(51) Int. Cl.: B66C 13/12, B66C 13/52

(54) **CRANE**

(30) Priority: 15.12.2022 JP 2022200132
(71) Applicant: TADANO LTD., Takamatsu-shi, Kagawa 761-0185 (JP)
(72) Inventor: NOGUCHI, Kazunari, Takamatsu-shi, Kagawa 761-0185 (JP)
(74) Representative: MFG Patentanwälte Meyer-Wildhagen Meggle-Freund Gerhard PartG mbB
(86) International application number: PCT/JP2023/035942
(87) International publication number: WO 2024/127773

(57) **Abstract**

This crane comprises an upper turning body that supports a boom, and a traveling vehicle body that supports the upper turning body and travels on the basis of electric power from a power source. The traveling vehicle body has: a frame on which the power source is disposed, and which has a frame opening at least the upper part of which is open; and a junction box that distributes electric power from the power source to an electric device. The junction box is cantilevered to the periphery of the frame opening in the frame.

## Description

### Technical Field

The present invention relates to a crane.

### Background Art

Patent Literature 1 discloses a mobile crane including a lower traveling body having a traveling function and an upper turning body provided in a turnable state in an upper portion of the lower traveling body. The lower traveling body includes an engine and travels on the basis of the power of the engine.

### Citation List

### Patent Literature

Patent Literature 1: JP 2020-66273 A

### Summary of the Invention

### Problems to be Solved by the Invention

In recent years, there has been a demand for motorized cranes as described above from the viewpoint of environmental protection and the like.

An object of the present invention is to provide a crane that can travel by electric power.

### Solutions to Problems

One aspect of a crane according to the present invention includes:
an upper turning body that supports a boom, and
a traveling vehicle body that supports the upper turning body and travels on the basis of electric power from a power source, in which
the traveling vehicle body has:
   a frame on which the power source is disposed, and which has a frame opening at least the upper part of which is open; and
   a junction box that distributes electric power from the power source to an electric device, and
   the junction box is cantilevered to the periphery of the frame opening in the frame.

### Effects of the Invention

According to the present invention, it is possible to provide the crane that can travel by electric power.

### Brief Description of Drawings

Fig. 1 is a schematic view of a mobile crane according to an embodiment.
Fig. 2 is a block diagram schematically illustrating a system configuration of the mobile crane.
Fig. 3 is a perspective view of the crane from which a part of the configuration is omitted.
Fig. 4 is a schematic view illustrating the periphery of batteries viewed from above.
Fig. 5 is a schematic view illustrating the periphery of the batteries viewed from above.
Fig. 6 is a sectional view taken along line C1-C1 of Fig. **4****.**
Fig. 7 is a perspective view of a support.
Fig. 8 is a schematic plan view for describing a positional relationship between a cooling device of a cooling system and a drain tray.
Fig. 9 is a schematic plan view for describing a positional relationship between the drain tray and a junction box.
Fig. 10 is a view illustrating a modification of a support mode of the junction box and corresponding to the sectional view taken along the line C1-C1 of Fig. **4****.**

### Description of Embodiments

Hereinafter, an example of embodiments of a crane according to the present invention will be described in detail based on the drawings. Note that a crane according to an embodiment described below is an example of the crane according to the present invention, and the present invention is not limited to the embodiment described below.

### [Embodiment]

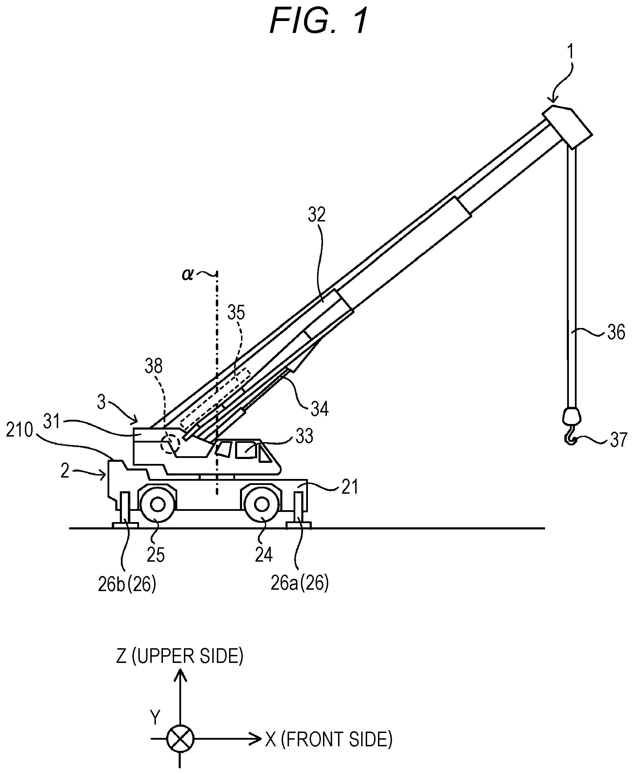

Fig. 1 is a schematic view of a mobile crane 1 (in the illustrated case, rough terrain crane) according to the present embodiment. The mobile crane is, for example, an all-terrain crane, a truck crane, or a loading truck crane (also referred to as a cargo crane). However, the crane according to the present invention may be various cranes.

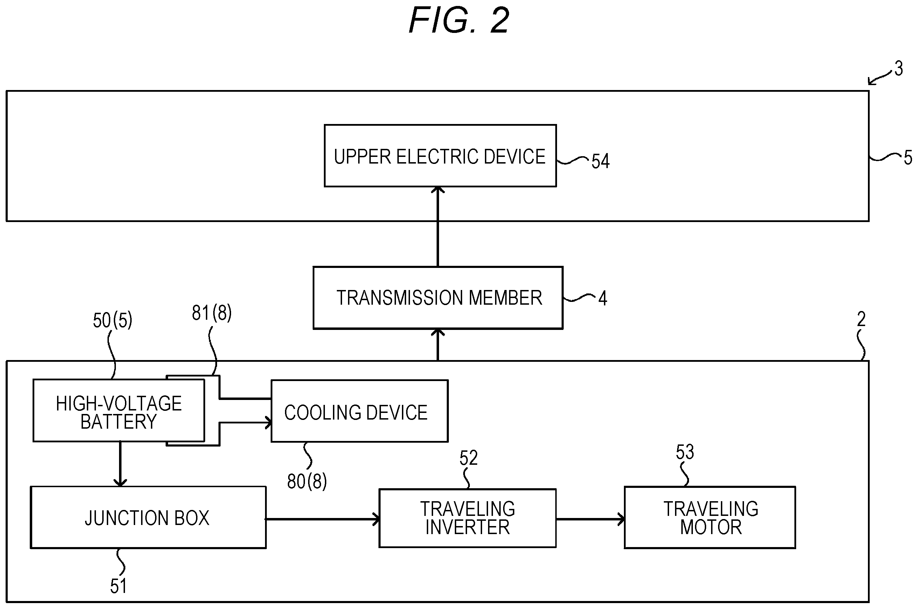

The mobile crane 1 includes a lower traveling body 2 and an upper turning body **3.** The mobile crane 1 is an electric crane including a high-voltage battery 50 (see Fig. 2). The mobile crane 1 travels on the basis of electric power supplied from the high-voltage battery 50. That is, the mobile crane 1 does not include an engine.

Further, the mobile crane 1 executes an operation other than traveling (for example, crane operations, cooling, and/or heating) on the basis of the electric power supplied from the high-voltage battery 50. The crane operation is, for example, a turning operation and/or a winch operation in a cargo conveyance operation. Hereinafter, a specific configuration of the mobile crane 1 will be described.

First, the configuration of the upper turning body 3 will be described with reference to Fig. **1.** Fig. 1 is a schematic view of the mobile crane **1.** The upper turning body 3 is provided on an upper portion of the lower traveling body 2, and can turn about a turning center axis α with respect to the lower traveling body **2.** The upper turning body 3 includes a turning base 31, a telescopic boom 32, and a cab 33.

The turning base 31 is supported on the upper portion of the lower traveling body 2 via a bearing (not illustrated). The turning base 31 turns on the basis of power generated by a turning actuator (not illustrated) provided in the upper turning body **3.**

In the present embodiment, the turning actuator is a hydraulic motor. The motor operates on the basis of supply and discharge of hydraulic oil. The hydraulic oil is supplied from the lower traveling body 2. Note that the turning actuator may be an electric motor. In this case, the electric motor for turning is driven on the basis of the electric power supplied from the high-voltage battery 50 described later.

The telescopic boom 32 is supported by the turning base 31 and has a plurality of telescopically combined booms. The telescopic boom 32 can vary in derricking angle (can perform a derricking motion) on the basis of power generated by a derricking cylinder 34.

The derricking cylinder 34 is a telescopic hydraulic cylinder and is provided in the upper turning body 3. The derricking cylinder 34 operates on the basis of supply and discharge of hydraulic oil. Note that the hydraulic oil is supplied by a hydraulic oil supply device (not illustrated) provided in the lower traveling body 2.

The telescopic boom 32 expands and contracts on the basis of the power generated by a telescopic cylinder 35. The telescopic cylinder 35 is a hydraulic cylinder and is provided inside the telescopic boom 32. The telescopic cylinder 35 operates on the basis of supply and discharge of hydraulic oil. Note that the hydraulic oil is supplied by a hydraulic oil supply device (not illustrated) provided in the lower traveling body **2.**

Further, the telescopic boom 32 supports a wire rope 36. The wire rope 36 hangs down from a distal end of the telescopic boom 32, and a hook 37 is provided at the distal end. A part of the wire rope 36 is wound around a winch 38.

The winch 38 is driven (rotates) on the basis of power generated by a winch actuator (not illustrated). In the present embodiment, the winch actuator is provided on the turning base 31 and is a hydraulic motor. The motor operates on the basis of supply and discharge of hydraulic oil. Note that the hydraulic oil is supplied by a hydraulic oil supply device (not illustrated) provided in the lower traveling body **2.**

When the winch 38 rotates, the wire rope 36 is wound up or unwound according to the rotation direction of the winch 38. Note that a motor for winching may be an electric motor. In this case, the electric motor for winching is driven on the basis of the electric power supplied from the high-voltage battery 50 described later.

Next, the lower traveling body 2 will be described with reference to Figs. 1 to **9****.** Note that an orthogonal coordinate system (X, Y, Z) illustrated in each drawing is used in describing a structure of the lower traveling body **2.** The X direction coincides with the front-rear direction of the lower traveling body **2.** The positive side in the X direction coincides with the front side of the lower traveling body 2. The negative side in the X direction coincides with the rear side of the lower traveling body 2. The Y direction coincides with the left-right direction of the lower traveling body 2. The positive side in the Y direction coincides with the left side when the front is viewed from the rear of the lower traveling body 2. The negative side in the Y direction coincides with the right side when the front is viewed from the rear of the lower traveling body 2. The Z direction coincides with the up-down direction of the lower traveling body 2. The positive side in the Z direction coincides with the upper side of the lower traveling body 2. The negative side in the Z direction coincides with the lower side of the lower traveling body 2.

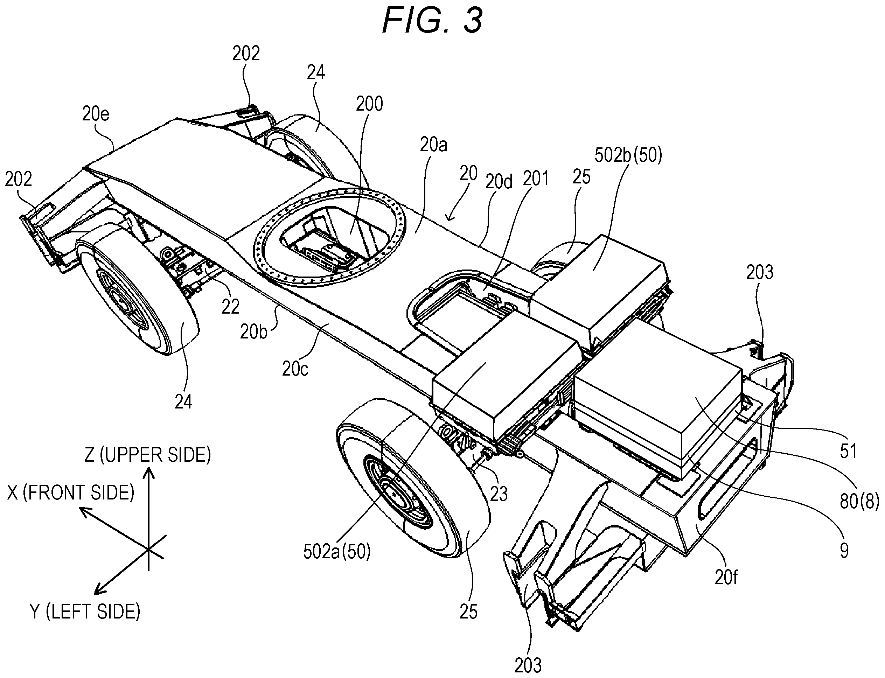

The lower traveling body 2 corresponds to an example of a traveling vehicle body, and can travel by electric power. Specifically, as illustrated in Figs. 1 and 3, the lower traveling body 2 includes a frame 20, a body 21, a front axle 22, a rear axle 23, front tires 24, rear tires 25, and an outrigger 26.

The frame 20 is a box-shaped member extending in the front-rear direction and having a rectangular sectional shape, for example, and constitutes a framework of the lower traveling body 2. The frame 20 includes an upper plate 20a, a lower plate 20b, a left plate 20c, a right plate 20d, a front plate 20e, and a rear plate 20f.

Further, the frame 20 has a transmission member housing space 200 formed by a through hole penetrating the frame 20 in the up-down direction. The transmission member housing space 200 is provided at a central position between the front axle 22 and the rear axle 23 in the frame 20.

Further, the frame 20 has a battery housing space 201 formed by a through hole penetrating the frame 20 in the up-down direction. The battery housing space 201 is open at least upward, and corresponds to an example of a frame opening. The battery housing space 201 is provided in the frame 20 at a position extending from the upper side to a rear end of the rear axle 23.

That is, it may be understood that the battery housing space 201 is provided in a rear portion of the frame 20. In the frame 20, a cross-sectional shape of a portion where the battery housing space 201 is formed is a closed section formed by a plurality of continuous plates. Note that a cross section of the frame 20 means a section of the frame 20 taken along a YZ plane.

The position of the battery housing space is not limited to the illustrated case. The battery housing space may be provided in the frame 20 at a position extending from the upper side to a front end of the front axle 22. In this case, the battery housing space may be formed by a through hole penetrating the frame 20 in the up-down direction.

The frame 20 has a pair of front outrigger supports 202 at a front end. The frame 20 has a pair of rear outrigger supports 203 at a rear end.

The front outrigger support 202 is a frame for supporting a front outrigger 26a. Further, the rear outrigger support 203 is a frame for supporting a rear outrigger 26b.

The rear outrigger support 203 corresponds to an example of an outrigger support frame, and is provided at a position overlapping a part (specifically, the rear end) of the battery housing space 201 in the up-down direction in the frame 20. Of the portion of the frame 20 where the battery housing space 201 is provided, a portion corresponding to the rear outrigger support 203 has higher rigidity than the other portions.

The body 21 (see Fig. 1) is a member constituting the outer shape of the lower traveling body 2, and is supported by the frame 20.

The front axle 22 is a shaft member extending in the left-right direction, and is supported by a portion of the frame 20 near a front end of the lower plate 20b. The front tires 24 are rotatably supported one-to-one at both ends of the front axle 22 in the left-right direction.

The rear axle 23 is a shaft member extending in the left-right direction, and is supported by a portion of the frame 20 near a rear end of the lower plate 20b. The rear tires 25 are rotatably supported at both ends of the rear axle 23 in the left-right direction.

The outrigger 26 includes a pair of the front outriggers 26a and a pair of the rear outriggers 26b. The pair of front outriggers 26a is supported one-to-one by the pair of front outrigger supports 202 of the frame 20. Further, the pair of rear outriggers 26b are supported one-to-one by the pair of rear outrigger supports 203 in the frame 20.

Further, the mobile crane 1 includes a transmission member 4 provided between the lower traveling body 2 and the upper turning body **3.** Specifically, the transmission member 4 is disposed in the transmission member housing space 200 of the frame 20. Further, such a transmission member 4 is a member for transmitting electric power, fluid (hydraulic oil and/or compressed air), signals, and the like between the lower traveling body 2 and the upper turning body 3 which rotate relatively.

Further, the mobile crane 1 includes a high-voltage system 5 as illustrated in Fig. **2****.** Hereinafter, the configuration of the high-voltage system 5 will be described.

The high-voltage system 5 is a system for executing traveling of the lower traveling body 2 and operations other than traveling (for example, crane operations, cooling, and/or heating) on the basis of the electric power supplied from the high-voltage battery 50.

The high-voltage system 5 includes, as main elements, the high-voltage battery 50, a junction box 51, a traveling inverter 52, a traveling motor 53, the transmission member 4, and an upper electric device 54. The elements constituting the high-voltage system 5 are connected by an electric circuit.

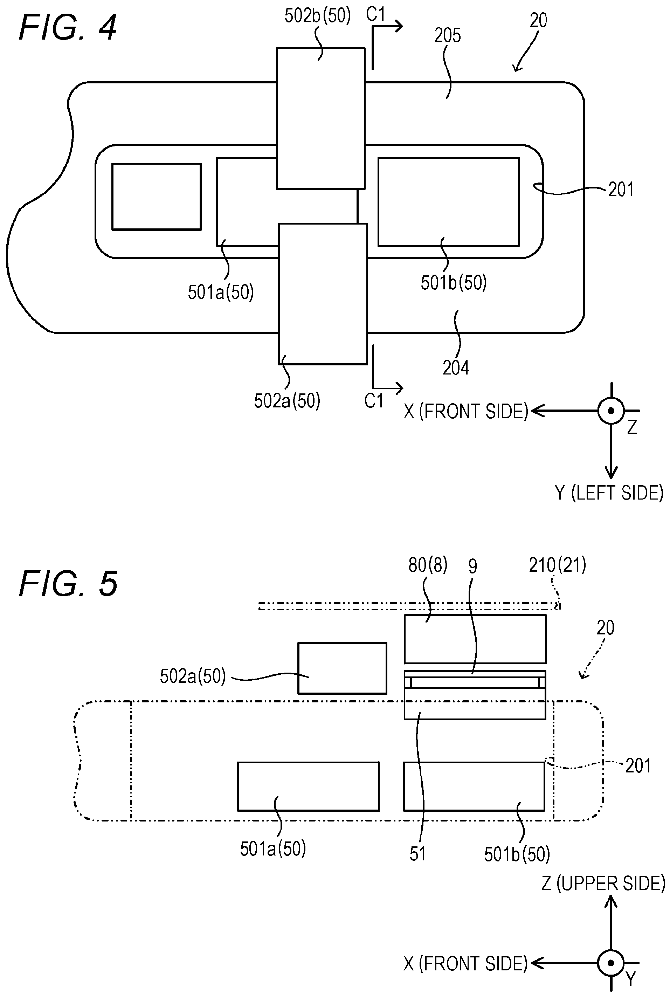

The high-voltage battery 50 corresponds to an example of a power source, and includes a plurality of batteries 501a, 501b, 502a, and 502b as illustrated in Figs. 4 and 5. Note that the junction box 51, a cooling device 80, and a drain tray 9 to be described later are omitted in Fig. 4. The batteries 501a and 501b are disposed in the battery housing space 201 of the frame 20.

Specifically, the battery 501a on the front side and the battery 501b on the rear side are disposed side by side in the front-rear direction in the battery housing space 201.

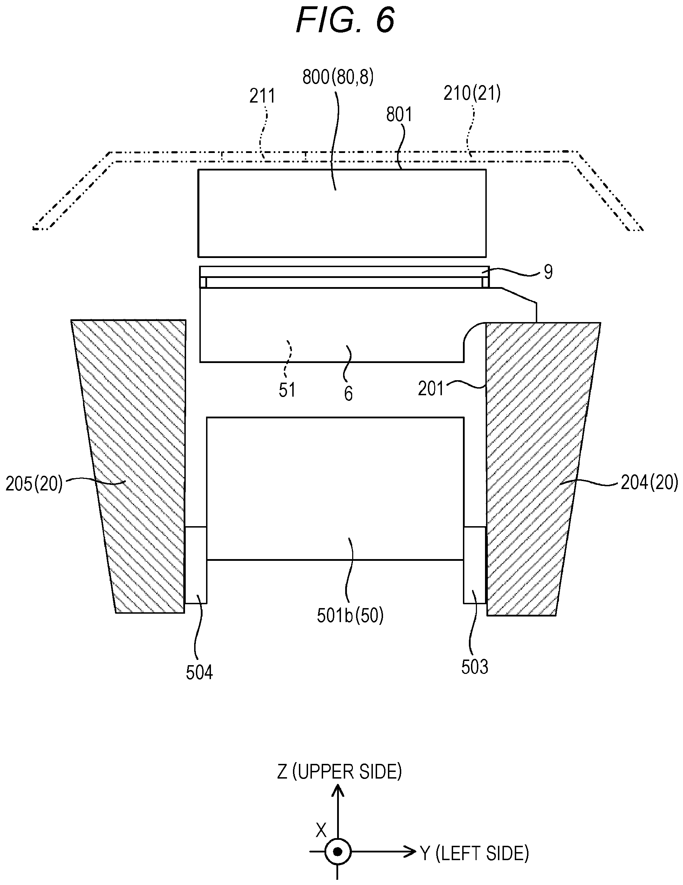

Each of the batteries 501a and 501b is fixed to the frame 20 at both ends. Here, a fixing mode of the battery 501b on the rear side with respect to the frame 20 will be described with reference to Fig. 6.

Fig. 6 is a sectional view taken along line C1-C1 of Fig. 4. In other words, Fig. 6 is a schematic view illustrating a state in which the periphery of the battery 501b on the rear side is viewed from the front. In the frame 20, a portion disposed on the left side of the battery housing space 201 is a left frame 204. The left frame 204 corresponds to an example of a left frame portion.

In the frame 20, a portion disposed on the right side of the battery housing space 201 is a right frame 205. The right frame 205 corresponds to an example of a right frame portion. The battery housing space 201 is sandwiched between the left frame 204 and the right frame 205 in the left-right direction.

As illustrated in Fig. 6, a left end and a right end of the battery 501b on the rear side are fixed to the left frame 204 and the right frame 205, respectively. Specifically, the left end of the battery 501b on the rear side is fixed to a lower end of the left frame 204 via a vibration suppression support member 503 such as a rubber mount.

Further, the right end of the battery 501b on the rear side is fixed to the lower end of the right frame 205 via a vibration suppression support member 504 such as a rubber mount.

The vibration suppression support members 503 and 504 respectively suppress distortions and vibrations of the left frame 204 and the right frame 205 from being transmitted to the battery 501b on the rear side. Note that a fixing mode of the front battery 501a with respect to the frame 20 is similar to the fixing mode of the battery 501b on the rear side with respect to the frame 20.

As described above, in the present embodiment, since the dead space of the frame 20 can be effectively utilized, the high-voltage battery 50 can be compactly disposed, and damage due to impact or the like of the high-voltage battery 50 can be suppressed. Further, the batteries 502a and 502b are disposed outside the frame 20 and above the batteries 501a and 501b.

Further, as described above, the batteries 501a and 501b are fixed to the lower end of the frame 20 having a relatively small deformation amount when the frame 20 is twisted. In addition, the batteries 501a and 501b are fixed to the frame 20 via the vibration suppression support members 503 and 504, respectively. Therefore, damage to the batteries 501a and 501b caused by the twist of the frame 20 can be suppressed.

The junction box 51 corresponds to an example of a high-voltage device, and is provided in the lower traveling body 2. Further, the junction box 51 is configured to integrate or distribute the electric power supplied from the high-voltage battery 50. The junction box 51 is connected to the high-voltage battery 50 and the traveling inverter 52.

Here, the junction box 51 will be described with reference to Figs. 5 to 7. The junction box 51 is provided above the battery 501b on the rear side in the battery housing space 201.

As illustrated in Fig. 5, the lower half of the junction box 51 is disposed in the battery housing space 201. On the other hand, the upper half of the junction box 51 is disposed above the battery housing space 201. Note that a support 6 to be described later is omitted in Fig. 5.

In the present embodiment, the junction box 51 is cantilevered to the frame 20. Specifically, the junction box 51 is cantilevered to the left frame 204 of the frame 20 via the support 6 (see Fig. 6).

In the present embodiment, the junction box 51 is supported above the pair of rear outrigger supports 203 in the frame 20. That is, the junction box 51 is supported by a portion having relatively high rigidity in the frame 20. Therefore, it is possible to further suppress the junction box 51 from being affected by the twist from the frame 20 at the vehicle rear that is greatly affected by the twist. Note that the position where the junction box 51 is fixed is not limited to the position of the present embodiment. It is sufficient for the junction box 51 to be cantilevered to the periphery of the battery housing space 201 in the frame 20.

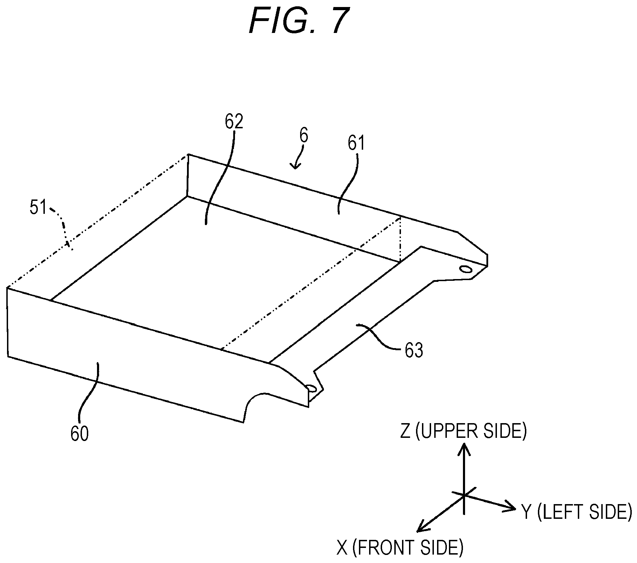

Here, the support 6 will be described with reference to Figs. 6 and 7. The support 6 is a member for cantilevering the junction box 51 to the frame 20.

As illustrated in Fig. 7, the support 6 includes a front plate portion 60, a rear plate portion 61, a lower plate portion 62, and a fixed plate portion 63. Note that a shape of each of the plate portions constituting the support 6 is schematically illustrated in Fig. 7. The shape of each of the plate portions is not limited to the shape illustrated in Fig. 7. For example, each of the plate portions may have a thinned portion for weight reduction.

The front plate portion 60 has a plate shape parallel to the YZ plane (the left-right direction and the up-down direction). The longitudinal direction and the lateral direction of the front plate portion 60 coincide with the left-right direction and the up-down direction, respectively. The front plate portion 60 faces a front side surface of the junction box 51 in the front-rear direction.

The rear plate portion 61 has a plate shape parallel to the YZ plane (the left-right direction and the up-down direction). That is, the rear plate portion 61 has a plate shape parallel to the front plate portion 60. The rear plate portion 61 faces the front plate portion 60 in the front-rear direction.

The longitudinal direction and the lateral direction of the rear plate portion 61 coincide with the left-right direction and the up-down direction, respectively. The rear plate portion 61 faces a rear side surface of the junction box 51 in the front-rear direction.

The lower plate portion 62 has a plate shape parallel to an XY plane (the front-rear direction and the left-right direction). The lower plate portion 62 connects a lower end of the front plate portion 60 and a lower end of the rear plate portion 61 in the front-rear direction. The lower plate portion 62 supports the junction box 51 from below.

For example, the junction box 51 is fixed to the lower plate portion 62 via a support member (not illustrated). The junction box 51 may be fixed to the front plate portion 60 and the rear plate portion 61 via a support member (not illustrated).

The fixed plate portion 63 has a plate shape parallel to the XY plane (the front-rear direction and the left-right direction). The fixed plate portion 63 connects a left end of the front plate portion 60 and a left end of the rear plate portion 61 in the front-rear direction.

The fixed plate portion 63 is disposed above the lower plate portion 62. The fixed plate portion 63 is fixed to an upper surface of the frame 20 (specifically, the left frame 204) by a fastening component such as a bolt. As the fixed plate portion 63 is fixed to the frame 20, the support 6 is fixed to the frame 20.

Note that the support 6 has a left end (specifically, the fixed plate portion 63) fixed to the frame 20 and a right end not fixed to the frame 20. In other words, the junction box 51 has a left end fixed to the frame 20 and a right end not fixed to the frame 20.

The right end of the support 6 is not in contact with the frame 20 (specifically, the right frame 205). In other words, the right end of the support 6 (in other words, the junction box 51) is disposed on the left side of the right frame 205.

Note that, although not illustrated, the right end of the support 6 may be supported by the right frame 205 via, for example, a slide plate or the like. In this case, the right end of the support 6 is movable with respect to the right frame 205.

Further, a shape of the support for fixing the junction box to the frame is not limited to the shape of the support 6 of the present embodiment. In the present embodiment, the support 6 fixes the junction box 51 to the left frame 204. However, the support may fix the junction box 51 to the right frame 205.

Further, the support 6 fixes the junction box 51 to the upper surface of the frame 20 (specifically, the left frame 204) in the present embodiment. However, the support 6 may fix the junction box 51 to a side surface (that is, a right side surface of the left frame 204) of the frame 20 (specifically, the left frame 204).

The junction box 51 is fixed to the support 6. Specifically, the junction box 51 is disposed in a space surrounded by the front plate portion 60, the rear plate portion 61, and the lower plate portion 62. The junction box 51 is fixed to the support 6 via a support member (not illustrated).

As described above, the junction box 51 is cantilevered to the left frame 204 in the present embodiment. Even if the left frame 204 and the right frame 205 are twisted during the crane operations, such a configuration suppresses the twist from being transmitted to the junction box 51. As a result, the damage to the junction box 51 caused by the twist of the frame 20 can be suppressed.

Specifically, the above-described twists of the left frame 204 and the right frame 205 are caused by turning of the telescopic boom 32. For example, when the telescopic boom 32 turns to the right side of the mobile crane 1, a reaction force in the up-down direction acting on the front outrigger 26a on the right side becomes larger than a reaction force in the up-down direction acting on the front outrigger 26a on the left side.

on the basis of such a difference in the reaction force acting on the outrigger, a moment in a predetermined direction acts on the frame 20. Then, the moment twists the left frame 204 and the right frame 205.

For example, when the junction box 51 is fixed to both the left frame 204 and the right frame 205, there is a possibility that the twists of the left frame 204 and the right frame 205 are transmitted to the junction box 51(the support 6 in the present embodiment), and the junction box 51(the support 6 in the present embodiment) is damaged.

On the other hand, since a fixing mode of the junction box 51 as described above is adopted in the present embodiment, it is possible to suppress the damage of the junction box 51 caused by the twist of the frame 20.

Further, as illustrated in Figs. 2 and 6, the mobile crane 1 of the present embodiment having the above-described configuration includes a cooling system 8 and the drain tray 9. Hereinafter, the configurations of the cooling system 8 and the drain tray 9 will be described.

The cooling system 8 is a device for cooling the high-voltage battery 50 (specifically, the batteries 501a, 501b, 502a, and 502b). As illustrated in Fig. 2, the cooling system 8 includes the cooling device 80 and a cooling pipe 81.

The cooling device 80 is a device that supplies cooling water to the cooling pipe 81. The cooling pipe 81 is formed in an annular shape. A first end (inlet-side end) of the cooling pipe 81 is connected to a supply port of the cooling device 80. Further, a second end (outlet-side end) of the cooling pipe 81 is connected to a return port of the cooling device 80. The cooling pipe 81 is laid out so as to surround the high-voltage battery 50.

The cooling water supplied from the supply port of the cooling device 80 passes through the cooling pipe 81 and returns to the cooling device 80 through the return port of the cooling device 80. The cooling water cools the high-voltage battery 50 while passing through the cooling pipe 81. The cooling water returning to the cooling device 80 is cooled by a fan (not illustrated) in the cooling device 80 and then supplied from the supply port to the cooling pipe 81.

A housing 800 houses the fan (not illustrated) for cooling the cooling water. Further, the housing 800 has an intake hole (not illustrated) on a side surface to take air into the housing 800. The fan cools the cooling water by blowing air taken in through the intake hole to the pipe through which the cooling water flows.

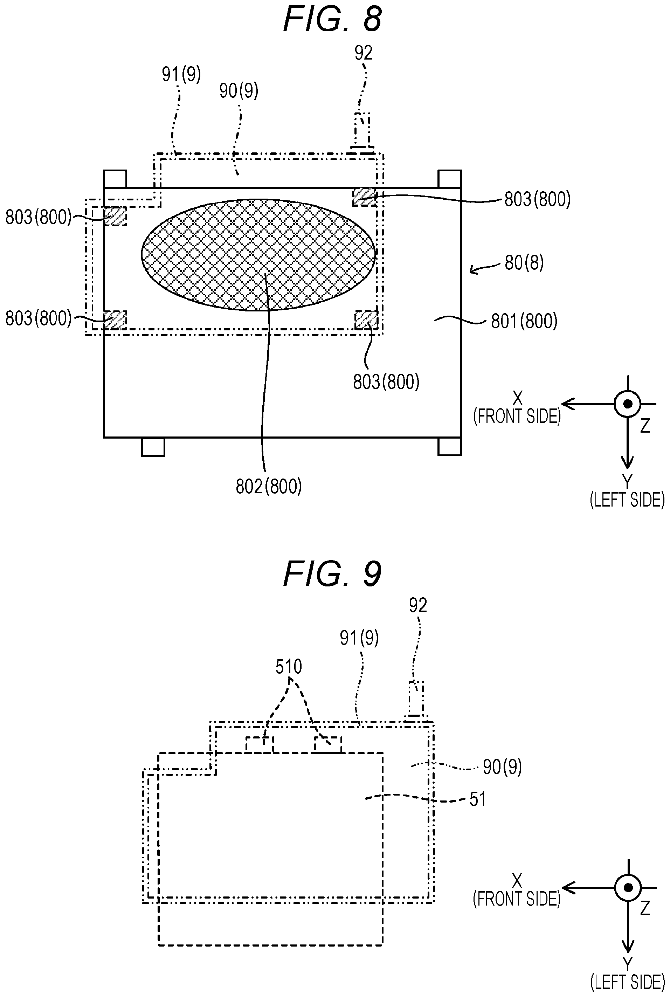

Further, as illustrated in Fig. 8, the housing 800 has an exhaust port 802 on an upper surface 801 to discharge the air after cooling the cooling water to the outside of the housing 800. Further, the housing 800 has a plurality of drain holes 803 on a bottom surface. In Fig. 8, the drain holes 803 are indicated by hatching with oblique lines.

As illustrated in Fig. 6, the cooling device 80 having the above configuration is provided above the junction box 51. The cooling device 80 is fixed to the frame 20 by a support (not illustrated).

Further, a region where the junction box 51 and the cooling device 80 are disposed is covered with a rear vehicle cover 210 (see Fig. 6) of the body 21. The rear vehicle cover 210 is a plate-shaped member that covers a predetermined region in the rear portion of the frame 20.

The upper surface 801 of the housing 800 in the cooling device 80 faces an inner surface (in other words, a lower surface) of the rear vehicle cover 210 in the up-down direction. The rear vehicle cover 210 includes an exhaust portion 211 (see Fig. 6) at a position facing the exhaust port 802 of the housing 800 in the up-down direction. The exhaust portion 211 includes, for example, a plurality of through holes penetrating the rear vehicle cover 210 in the up-down direction.

The exhaust portion 211 is a portion through which the air discharged from the exhaust port 802 of the housing 800 passes. The air that has passed through the exhaust portion 211 is discharged to the outside of the rear vehicle cover 210.

As described above, since the exhaust portion 211 is provided at the position corresponding to the exhaust port 802 of the housing 800 in the rear vehicle cover 210, the exhaust port 802 of the housing 800 can be regarded as being exposed to the outside of the rear vehicle cover 210.

Therefore, for example, in rainy weather, water that has entered from the exhaust portion 211 enters the housing 800 through the exhaust port 802. Then, the water that has entered the housing 800 passes through the drain holes 803 provided in the bottom surface of the housing 800 and is discharged to the lower side of the housing 800.

In the present embodiment, the junction box 51, which is the high-voltage device, is disposed below the cooling device 80 (the housing 800). Therefore, it is not preferable that the water discharged to the lower side of the housing 800 comes into contact with a terminal 510 (see Fig. 9) of the junction box 51 or the like.

Therefore, the drain tray 9 (see Fig. 6) is provided between the junction box 51 and the cooling device 80 (the housing 800) in the present embodiment.

In other words, the drain tray 9 is provided above the junction box 51 and below the cooling device 80 (the housing 800).

The drain tray 9 has a tray shape having a bottom surface portion 90 and a peripheral wall portion 91. The drain tray 9 is supported by the junction box 51 via a support member (not illustrated). That is, the drain tray 9 is cantilevered to the frame 20 (specifically, the left frame 204) via the junction box 51. Since the junction box 51 is cantilevered to the frame 20 (specifically, the left frame 204) via the support 6, it can be understood that the drain tray 9 is supported by the support 6.

The bottom surface portion 90 has a plate shape. The peripheral wall portion 91 is provided along an outer peripheral edge of the bottom surface portion 90. The peripheral wall portion 91 has a plate shape orthogonal to the bottom surface portion 90 and is continuous over the entire circumference of the bottom surface portion 90. In the present embodiment, the height of the peripheral wall portion 91 is the same over the entire circumference. However, the height of the peripheral wall portion 91 may be partially different.

The drain tray 9 collects water discharged downward from the cooling device 80 (the housing 800) to draw off the water in a predetermined direction.

In the present embodiment, the drain tray 9 is inclined at a predetermined angle with respect to the horizontal direction such that the right rear part thereof is the lowest. The drain tray 9 has a drain port (not illustrated) at a right rear end. The drain tray 9 guides the collected water to the right rear and draws off the water.

The drain tray 9 has a drain hose 92 (see Figs. 8 and 9) at a right rear end. The drain hose 92 is connected to the drain port (not illustrated) of the drain tray **9.** The drain hose 92 guides the water drawn off from the drain port of the drain tray 9 to a predetermined position of the mobile crane 1 to draw off the water. Specifically, the drain hose 92 draws off the water into a space below a rear end of the mobile crane 1.

Note that the drain hose 92 may be omitted. In this case, for example, the drain hose 92 may draw off the water to a position existing at the rear of the battery housing space 201 on the upper surface of the frame 20. In such a configuration, sand and dust adhering to the upper surface of the frame 20 can be caused to flow by the water drawn off from the drain hose 92.

Here, a positional relationship among the junction box 51, the drain hose 92, and the cooling device 80 (the housing 800) will be described with reference to Figs. 8 and **9****.**

Fig. 8 is a schematic plan view illustrating a positional relationship between the cooling device 80 (the housing 800) of the cooling system 8 and the drain tray **9.** Note that a plan view means a view illustrating a state in which the junction box 51, the drain hose 92, and the cooling device 80 (the housing 800) are viewed from above. Further, a plan view means that a member is viewed from above.

In **Fig. 8****,** portions indicated by solid lines are portions corresponding to the cooling device 80 (the housing 800). Further, in **Fig. 8****,** portions indicated by two-dot chain lines are portions corresponding to the drain tray **9.**

Further, in **Fig. 8****,** a portion hatched in an oblique lattice indicates the exhaust port 802 of the cooling device 80 (the housing 800). Furthermore, in **Fig. 8****,** the hatched portion indicates the drain holes 803 provided in the bottom surface of the cooling device 80 (the housing 800).

Fig. 9 is a schematic plan view for describing a positional relationship between the drain tray 9 and the junction box 51.

In Fig. 9, portions indicated by two-dot chain lines are portions corresponding to the drain tray 9. In Fig. 9, portions indicated by dotted lines are portions corresponding to the junction box 51.

First, as illustrated in Fig. 8, the drain tray 9 is disposed so as to overlap a part of the cooling device 80 (the housing 800) in the up-down direction. Specifically, the drain tray 9 is disposed so as to overlap the exhaust port 802 of the cooling device 80 (the housing 800) in the up-down direction.

Further, the drain tray 9 is disposed so as to overlap the drain hole 803 of the cooling device 80 (the housing 800) in the up-down direction. Note that it is preferable that the drain tray 9 overlaps all the drain holes 803 in the up-down direction.

However, the drain tray 9 does not necessarily overlap all the drain holes 803 in the up-down direction. In this case, it is sufficient for the drain tray 9 to be disposed so as to overlap, in the up-down direction, the drain holes 803 overlapping the junction box 51 (specifically, the terminal 510) in the up-down direction, for example.

Next, as illustrated in Fig. 9, the drain tray 9 is disposed so as to overlap a part of the junction box 51 in the up-down direction. Specifically, the drain tray 9 is disposed so as to overlap at least the terminal 510 of the junction box 51 in the up-down direction.

In summary, the drain tray 9 is disposed at a position overlapping the exhaust port 802 of the cooling device 80 (the housing 800), the drain holes 803 of the cooling device 80 (the housing 800), and the terminal 510 of the junction box 51 in the up-down direction between the cooling device 80 and the junction box 51.

As described above, the mobile crane 1 according to the present embodiment includes the drain tray 9, and thus can suppress the water discharged downward from the cooling device 80 (the housing 800) from coming into contact with the terminal 510 or the like of the junction box 51.

### <Functions and Effects of Present Embodiment>

According to the present embodiment having such a configuration as above, the mobile crane 1 capable of traveling on the basis of the electric power of the high-voltage battery 50 can be achieved.

In particular, since the junction box 51 is cantilevered to the frame 20 in the present embodiment, the damage to the junction box 51 caused by the twist of the frame 20 can be suppressed. The reason for this is as described above.

Further, the drain tray 9 is provided between the junction box 51 and the cooling device 80 (the housing 800) in the up-down direction in the present embodiment. Therefore, it is possible to suppress the water discharged downward from the cooling device 80 (the housing 800) from coming into contact with the terminal 510 and the like of the junction box 51. The other functions and effects of the mobile crane 1 according to the present embodiment have been described above.

### <Supplementary Notes>

In the above-described embodiment, the junction box 51 is fixed to the upper surface of the frame 20 (specifically, the left frame 204). In this state, the upper half of the junction box 51 is disposed above the battery housing space 201. That is, the upper half of the junction box 51 is disposed above the upper surface of the frame 20.

The position of the junction box 51 in the up-down direction is determined so as to satisfy a constraint due to the arrangement relationship among the junction box 51 and devices (for example, the battery 501b on the rear side and the cooling device 80) disposed above and below the junction box 51.

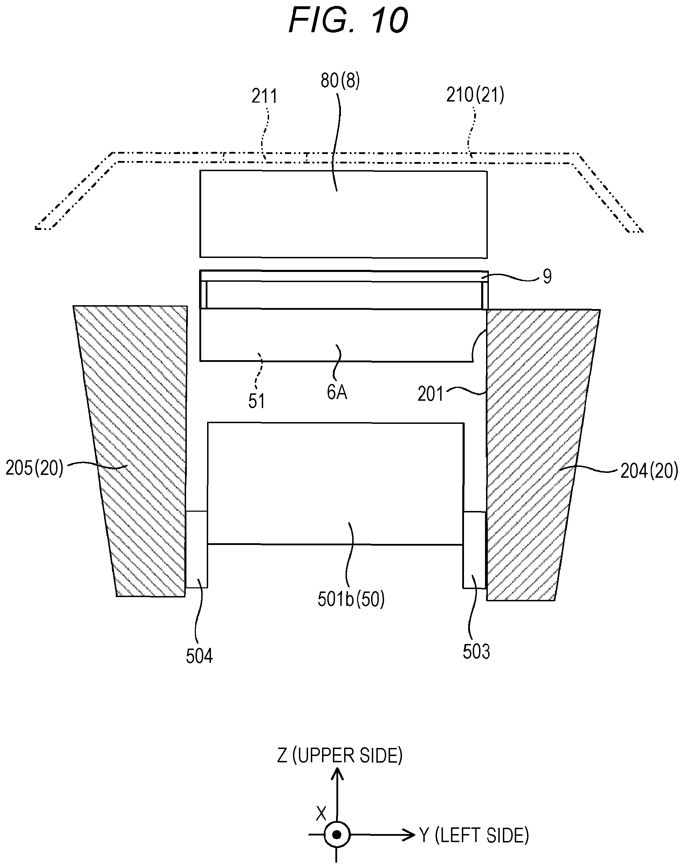

For example, when the position of the junction box 51 in the up-down direction needs to be lower than the position of the junction box 51 in the up-down direction in the present embodiment due to the constraint, the junction box 51 may be cantilevered to the side surface of the frame 20 (for example, the right side surface of the left frame 204 as illustrated in Fig. 10.

Also in a modification illustrated in Fig. 10, the junction box 51 is fixed to the frame 20 (specifically, the left frame 204) via a support 6A. Note that the junction box 51 may be cantilevered to the left side surface of the right frame 205.

Further, the batteries 501a, 501b, 502a, and 502b of the high-voltage battery 50 are provided in the rear portion of the frame 20 in the above-described embodiment. However, the batteries (hereinafter, referred to as front batteries) may be provided in a front portion of the frame 20.

In this case, the front batteries may be disposed in the battery housing space provided in the front portion of the frame 20. Then, the junction box (hereinafter, referred to as a front junction box) corresponding to the front batteries may also be provided in the front portion of the frame 20.

Further, also in this case, the front junction box may be cantilevered to the frame 20 by a structure similar to a support structure of the junction box 51 in the above-described embodiment or a support structure of the junction box 51 in the modification illustrated in Fig. 10.

Further, the junction box 51 is an example of the high-voltage device in the above-described embodiment. However, the high-voltage device is not limited to the junction box. For example, the high-voltage device may be the high-voltage battery 50 (specifically, the battery 501b on the rear side). Further, the high-voltage device may be various devices connected to the high-voltage battery 50.

Further, the drain tray 9 is inclined at a predetermined angle with respect to the horizontal direction such that the right rear part thereof is the lowest in the above-described embodiment. However, the inclination direction of the drain tray is not limited to the above-described embodiment. For example, a drain tray may be inclined at a predetermined angle with respect to the horizontal direction such that the left rear part thereof is the lowest. In this case, the drain tray may have a drain port (not illustrated) at the left rear end. Then, the drain tray may draw off the collected water to the left rear.

This application is based upon and claims the benefit of priority from Japanese Patent Application No. 2022-200132, filed on December 15, 2022, the entire contents of which are incorporated herein by reference.

### Industrial Applicability

The crane according to the present invention is not limited to a rough terrain crane, and may be, for example, various mobile cranes such as an all-terrain crane.

### Reference Signs List

- 1: mobile crane
- 2: lower traveling body
- 20: frame
- 20a: upper plate
- 20b: lower plate
- 20c: left plate
- 20d: right plate
- 20e: front plate
- 20f: rear plate
- 200: transmission member housing space
- 201: battery housing space
- 202: front outrigger support
- 203: rear outrigger support
- 204: left frame
- 205: right frame
- 21: body
- 210: rear vehicle cover
- 211: exhaust portion
- 22: front axle
- 23: rear axle
- 24: front tire
- 25: rear tire
- 26: outrigger
- 26a: front outrigger
- 26b: rear outrigger
- 3: upper turning body
- 31: turning base
- 32: telescopic boom
- 33: cab
- 34: derricking cylinder
- 35: telescopic cylinder
- 36: wire rope
- 37: hook
- 38: winch
- 4: transmission member
- 5: high-voltage system
- 50: high-voltage battery
- 501a, 501b: battery
- 502a, 502b: battery
- 503, 504: vibration suppression support member
- 51: junction box
- 510: terminal
- 52: traveling inverter
- 53: traveling motor
- 54: upper electric device
- 6, 6A: support
- 60: front plate portion
- 61: rear plate portion
- 62: lower plate portion
- 63: fixed plate portion
- 8: cooling system
- 80: cooling device
- 800: housing
- 801: upper surface
- 802: exhaust port
- 803: drain hole
- 81: cooling pipe
- 9: drain tray
- 90: bottom surface portion
- 91: peripheral wall portion
- 92: drain hose

## Claims

1. A crane comprising:
an upper turning body that supports a boom; and
a traveling vehicle body that supports the upper turning body and travels on a basis of electric power from a power source, wherein
the traveling vehicle body has:
a frame on which the power source is disposed, and which has a frame opening at least an upper part of which is open; and
a junction box that distributes electric power from the power source to an electric device, and
the junction box is cantilevered to a periphery of the frame opening in the frame.

2. The crane according to claim 1, wherein the junction box is cantilevered to one frame portion of a left frame portion and a right frame portion which sandwich the frame opening.

3. The crane according to claim 2, wherein the junction box is cantilevered, above the power source, to an upper surface of the one frame portion.

4. The crane according to claim 2, wherein the junction box is cantilevered, above the power source, to a side surface of the one frame portion.

5. The crane according to claim 1, wherein
the power source is fixed, in a lower portion of the frame opening, to both the left frame portion and the right frame portion.

6. The crane according to claim 1, wherein
the frame includes an outrigger support frame that supports an outrigger below the frame opening, and
the junction box is fixed to the frame at a position above the outrigger support frame.

7. The crane according to claim 1, wherein
the junction box is cantilevered to the frame via a support.
